# EUROPEAN PATENT APPLICATION

(11) **EP 2 104 104 A1**
(43) Date of publication of application: **23.09.2009**
(21) Application number: 08251013.2
(22) Date of filing: 20.03.2008
(51) Int. Cl.: G11B 27/034, G06Q 30/00

(54) **Multimedia content assembling for viral marketing purposes**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

Creating and editing time-varying media articles for viral marketing purposes is disclosed. The system comprises an user interface containing a parameter selection area and a presentation area. The user selects some general parameters of the video that he wants to generate and the system transforms those parameters into some more specific control parameters. These are then used to generate in a semi-automatic manner the video material from multiple segments stored on a server. A link is created referencing the selected parameters, allowing also the regeneration of the media article at any moment. Some of the control parameters can be set by default or localized e.g. accordingly to the user's geographical position. The link is sent to other recipients allowing them to modify the parameters and correspondingly the media article. Some scenarios presenting the method application to marketing, sports and stories are disclosed.

## Description

### Field of the Invention

The present invention relates to a media system and corresponding method. In particular, it relates to a system for assisting users in generating, editing and distributing media, especially video media, and will find particular application in so-called "viral marketing" activities.

### Background to the invention

### Viral Marketing

The phenomenon of so called "viral marketing" is becoming increasingly important to commercial enterprises having well known brands which they perceive as having significant commercial value. In brief, viral marketing involves the creation of content (often short videos, but also simple messages, stories, photos, video games, etc.) which are passed around within a social network (usually using technical means such as the Internet) because the people in the social network find the content interesting or amusing. The marketing aspect results from the fact that the content itself is usually produced by or on behalf of a commercial enterprise and that it, in some way, seeks to enhance the brand value of a brand associated with the enterprise. This in turn is believed to increase the overall profitability of the commercial enterprise (e.g. by increasing overall sales and/or margin levels, etc.) and such commercially oriented content may be termed viral adverts.

In general, viral adverts use communications media like email, SMS texts, MMS multimedia messages, or IM (instant messaging) to spread text, graphics or video between friends, colleagues, and other social groupings. The text form has been around since the beginnings of email. Graphics are sent as attachments or as links. Video is almost always sent as links.

The basic idea, as mentioned above, is that a person finds a funny, interesting, or clever item, and passes it on to his/her friends, who pass it on to their friends, etc, etc. The passing on is almost always of the original, unaltered item (usually because few people have the ability to make meaningful changes).

For text, however, some people will make edits to the text by adding something of their own creation, or making an edit, or adding a comment or deleting some of the text or someone else's previous comment(s), etc.

For graphics, edits are much rarer because of the difficulty of opening a graphic in a suitable editing program and then making a meaningful change (which requires skill or craft ability), then saving the edited file and re-attaching it for subsequent passing on to another recipient (which requires knowledge of email or texting systems).

For video, the problems pertinent for graphics are multiplied (the editing software is less immediately available, harder to use, more skill or craft ability is required, harder to save in a suitable form without detailed technical knowledge, harder to attach because of file size limits, etc.) and the vast majority of videos are never edited and passed on - instead the link to the video is sent on unedited, with perhaps a comment made by the passer-on. Because of the nature of video material, additional comments tend to be overlooked because recipients tend to click on the link and then watch the video without reading the text contents of the associated message, so any comments made by the sender tend to be ignored - the video is so compelling in comparison to text that the video is watched, and associated text in the email or text message is not noticed.

Commercial viral marketing deliberately produces suitably funny, interesting or clever material, normally with an embedded branding message, and makes them available to people to send to their friends, colleagues or other social groupings. It thus exploits the ad-hoc social sending of items for commercial advertising purposes.

### Video Editinp/Creation

Systems are known which assist users in creating video media. WO 04/025508, applied for by the present applicants, describes a system to automate or semi-automate the construction of a media article (especially a video media article) from a collection of media segments each of which is associated with corresponding "meta data" which can be analysed and processed to obtain a desired video article.

More recently, other examples of systems which enable somewhat personalised videos to be created have appeared. For example Volkswagon on their US website have introduced a facility to specify various options associated with one of their car models and then to see a "personalised" video which is specific to the various options requested by the user.

However, to date, to the best of the Applicant's knowledge, no-one has considered developing a system for editing and/or creating content for use in viral marketing.

### Summary of the Invention

According to a first aspect of the present invention, there is provided a system for creating and editing time-varying media articles, the system comprising:
a sender user device and a recipient user device both having a user interface including a media presenting means and a parameter editing means;
media assembly means for assembling a media article based on a set of parameter values such that different sets of parameter values will cause correspondingly different media articles to be assembled; and
media segment storage means for storing a plurality of media segments suitable for combining together to form a media article; wherein
the user interface includes means for generating a reference associated with or including a set of parameter values suitable for use by the assembly means in assembling a media article, the reference being suitable for electronic distribution from the sender user device to the recipient user device and such that, when provided to the media assembly means, it permits assembly of the media article and presentation thereof within the media presenting means of either the sender or recipient user interface, and wherein, upon receipt of the reference by the recipient user device, a new reference may be created, based on the received reference, by modifying one or more of the parameter values to generate a new set of parameter values using the parameter editing means of the user interface.

Preferably, the system further includes a mapping means for mapping simple parameters to control parameters which permits a user to control the values of only a relatively small number of simple parameters via the user interface, which are then mapped by the mapping means to control parameters which more directly control the operation of the media assembly means in its assembly of the media article.

Preferably, the user interface is a web-page run within a standard web-browser application running on the sender/recipient user device provided by a web-server which includes or is connected to the media assembly and media segment storage means. The web-page preferably includes an area for displaying the video output of a standard media player also running on the user device as a "plug-in" application associated with the web-browser.

To use the system, an original content provider creates or selects (and, if necessary, annotates - i.e. associates meta data with) a number of media segments and generates a series of parameters (and values or ranges of values which those parameters may take) In preferred embodiments, the content provider additionally provides the rules for the mapping means which specify how the simple parameters exposed to end users are to be mapped to the control parameters used to drive the media assembly means. At least some of these (simple) parameters are then exposed to users via the user interface (in a preferred embodiment, the user interface is presented to the user as a web page which may be accessed by the user in a suitable web-browser from a remote computer connected to the Internet). A user may then select desired values for the exposed parameters in order to "create" a media article (in fact, in preferred embodiments, all that is created at this time is a simple list of parameter values).

In order to "view" (it should be borne in mind that the media may be purely audio in which case it will be heard rather than seen) a media article an option to do this is selected by the user via the user interface and the selected parameter values are fed either directly to the media assembly means (for embodiments not including a mapping means) or to the mapping means which generates control parameters from the input (simple) parameters and these control parameters are then fed to the media assembly means. In preferred embodiments, a media article is then assembled (on the fly) by the media assembly means and directly streamed to the user's device (e.g. a computer running web browser software) for presentation to the user via the user interface's presentation means (typically this will just be a small window located within the web-page displayed by the user's web browser).

In this way a first user may "create" a video media article using the system of the present invention by simply selecting desired values for a number of fairly simple parameters provided by the original content provider. Furthermore, having "created" a media article, a reference to this article may then be distributed to further users (typically by incorporating an HTML "link" into an email or instant message, etc. or by posting it on a bulletin board, etc.) which, if presented to the media assembly means (which in preferred embodiments is simply a web server hosting the centralised portions of the system, and the presentation simply involves a user clicking on the provided "link"), causes the media article (or a similar one - see below) to be presented to the recipient of the reference within a new instance of the user interface (within the media presentation means). At the same time, the parameter editing means also presents the parameters (and in particular the values of these parameters selected by the sender which cause the memdia article to take the particular form viewed by the recipient) to the new recipient so that s/he may change any or all of these parameter values and send on a new reference (with the altered list of parameters) to subsequent recipients, etc.

Preferably, the set of parameters used by the media assembly means (or the mapping means) includes some parameters which are not exposed to users but instead are controllable by other parties or automatically by the system. These can be used, for example to permit the media article to be tailored to a particular geographical location of the user initiating the presentation, or to the time of day or day of week, etc.

Preferably, the media assembly means comprises a media assembly means as described in WO 04/025508 the contents of which are hereby incorporated by reference.

Preferably, the media assembly means includes an encoded audio/video clip assembler as described in co-pending European patent application No.... (Agent's ref A31659 EP#) filed on 14 march 2008, the contents of which are hereby incorporated herein by reference, in which audio/video clips (which have been pre-encoded into a compressed format suitable for transmission over a limited bandwidth connection, preferably using a process in which the clip is encoded from an expanded raw audio video clip containing more audio and video frames than actually desired in the final clip, and then the excess audio and video frames are removed from the encoded clip such that the encoded audio and video streams have approximately the same duration) are concatenated together and wherein at each concatenation operation, the overall audio and video stream durations of the composition are compared and if they are unequal excess audio and/or video frames are trimmed off the end, or extra frames are added (e.g. silence audio frames may be added, or repeating last video frames may be added, etc.) to ensure that the composition remains substantially in audio/video synchronisation throughout the finally transmitted composition.

It should be noted that many of the functions of the present invention may be performed on different pieces of hardware located at different positions within the overall network, or they may be distributed over a number of different devices. In some cases it will be advantageous to have the media segments (most preferably video segments, audio segments and/or audio/video segments) stored in a distributed manner over a number of different devices scattered throughout the Internet. Similarly, the system preferably includes web server functionality which a user's web browser will be connected to upon clicking on a link providing a reference to a set of parameters associated with a particular media article. This web server functionality is preferably distributed over a number of different web servers. The web server functionality may perform all of the functions of providing the user interface (i.e. it may be a web application with a "thin client" comprised solely of a standard web browser application operating on a user's device); alternatively, the user's device could include a somewhat "thicker" client application performing more of the required functionality. In particular, where the network connection to the user device (in fact between the serving web server and the user device) is of relatively low bandwidth, it may be advantageous to have the media segments stored (or cached) more locally to the client device and to have the user device include the media assembly means functionality as a locally running application which can more readily access and compile multiple media segments into a complete media article.

According to a second aspect of the present invention, there is provided a method of creating and editing time-varying media articles, the method comprising:
causing a user interface on a user device associated with a sending user to display a media presenting area and a parameter editing area;
responding to user inputs from the sending user via the user interface to set a plurality of values for parameters displayed in the parameter editing area;
responding to further user inputs from the sending user via the user interface to cause a message to be sent to a user device associated with a recipient user including a reference to the values for the parameters selected by the sending user; and, in response to either the sending user selecting to preview the media article or the recipient user selecting to view the media article by referring to the received reference:
assembling a plurality of media segments, stored in a media segment storage means, in dependence upon the set values for the parameters displayed in the parameter editing area, or referred to by the reference, in order to generate a media article; and
causing the generated media article to be played within the user interface of either the sending user or the recipient user respectively; wherein, when the recipient uses the reference to view a media article, the user interface of the recipient user device is caused to provide the same functionality as was provided to the sending user so the recipient user can view the parameter choices made by the sender user to cause the particular media article to be assembled and may further edit the parameter values to cause a different media article to be assembled and to permit the recipient to generate and forward on to further recipient users a new reference to the possibly edited set of parameter values.

According to a third aspect of the present invention, there is provided a method of assembling a media article comprising receiving a set of parameters, each parameter in the set taking one of a finite, predetermined number of possible options, selecting one of a predetermined set of stored possible playlists based on the received set of parameters and assembling the media article from pre-processed and stored media components selected in dependence upon the playlist.

Preferably the third aspect of the present invention is further characterised by storing a plurality of media components having no overlapping content and associating each of these components with two or more parameters such that two or more parameters are required to specify a media component. Alternatively or additionally, the method is further characterised by obtaining some of the parameters from a web-site form filled in by a user and obtaining some of the parameter values automatically based on temporal or geographical considerations associated with the time and/or date, or the location of the device, on which the media article is to be displayed or a user thereof.

Further aspects of the present invention provide corresponding computer programs and carrier means, especially tangible carrier means such as magnetic or optical storage disks or non-volatile solid state memory devices carrying such computer programs.

### Brief Description of the Drawings

In order that the present invention may be better understood, embodiments thereof will now be described, by way of example only, with reference to the accompanying drawings in which:
Figure 1 is a schematic diagram of an example computer network embodying an aspect of the present invention;
Figure 2 is a schematic diagram of a user device of the network of Figure 1 in greater detail; and
Figure 3 is a schematic illustration of the main functional elements of an embodiment of the present invention and their interactions, independently of the hardware elements on which these functions are performed.

### Specific Description of Embodiments of the Invention

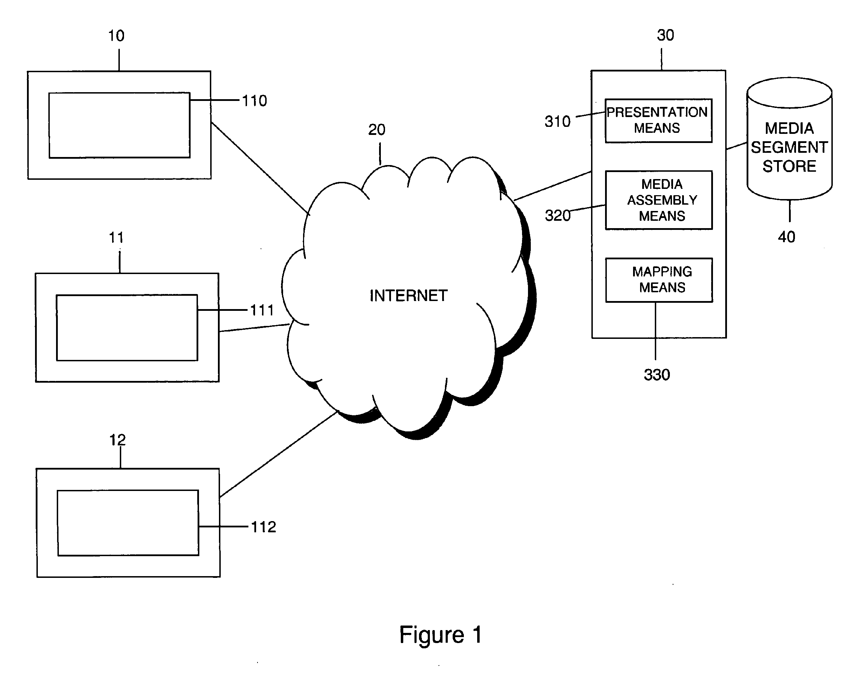

Figure 1 shows user devices 10, 11, 12 running web browser applications which display user interfaces 110, 111, 112 to the respective users; the user devices 10, 11, 12 are connected to the Internet 20 which in turn is connected to a web server 30, which includes presentation means 310, media assembly means 320 and mapping means 330, and which in turn is connected to a media segment data store 40.

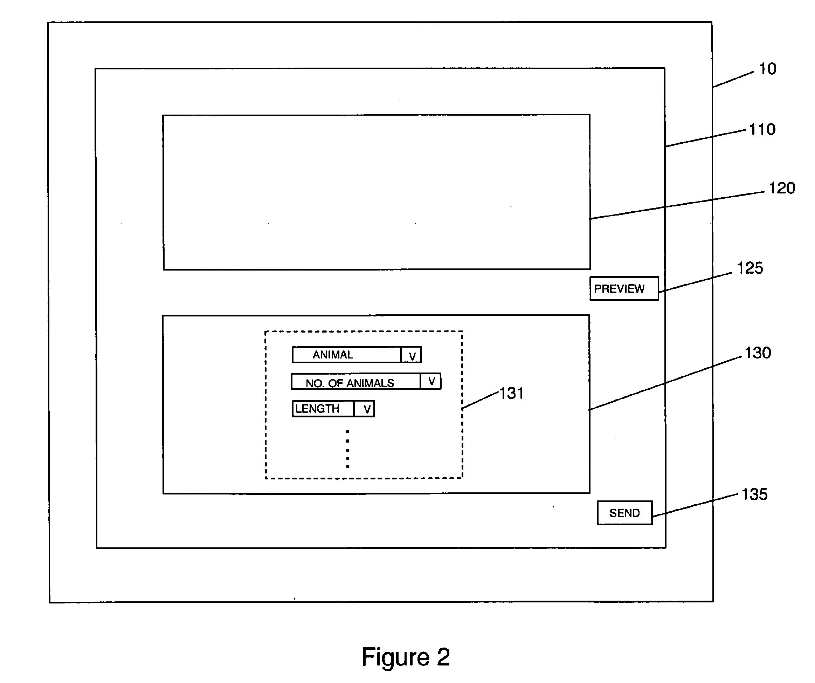

Figure 2 schematically shows the user device 10 in greater detail. In particular, it shows how the user interface 110 (which is provided as an interactive web-page provided by the web server 30) presents to the user a video viewing area 120 and a parameter editing area 130 which, in this embodiment, includes a set of drop-down menu items enabling the user to select from one of the drop down options for each parameter. Additionally, the user interface includes a preview video button 125 and a send button 135. Upon selecting the preview button 125 the video is assembled (by the media assembly means 320) and played (using, for example a plug-in media player associated with the web browser 100) in the video viewing area of the user interface 110. Upon selecting the send button 135 an email client application is opened and a new email message is generated including an HTML link which can be used by recipients of the email to view the video article associated with the currently selected values (which will take default values unless otherwise positively set by a user) for the user selectable parameters. Note that in alternative embodiments, the user interface could display a video in the full screen available when the preview button is selected rather than in a small window, and then, for example, automatically move to a screen presenting the parameter list 131 to the user and the various other options, including the options to preview 125 or send 135 the video article.

In order to assist the reader in understanding the overall operation of the above system, some typical usage scenarios are now described.

### Scenario 1

A "Service Provider" offers a viral marketing service allowing multimedia content to be generated and manipulated by their Community of Interest (Col) (e.g. fans, customers, suppliers, associates, employees, general public, etc.). Col members ("Senders") interact with the service to create a personalised piece of content which they can preview and re-edit as required. Content is chosen and personalised by the Sender by entering and/or selecting a number of Parameters. Additional Parameters can be chosen (in advance or at the time of creation) by the Service Provider or other third parties.

Once the sender is happy with the content they can send this to their friends ("Recipients"). The System generates and permits the user to send a personalised HyperText Markup Language (HTML) Universal Resource Locator (URL) link to the recipients (rather than the multimedia content itself). This URL Link (in the present embodiment) refers to the array of Parameters which were used to create the content (though in alternative embodiments it could explicitly include the array of parameters). The link can be sent via a variety of means including e-mail (which is the default mechanism), Instant Messenger (IM) message, Short Message Service (SMS) message, Multimedia Message Service (MMS) message, or by publishing the link to a bulletin board or blog or other similar type of web site.

Upon receipt and activation of the URL Link (e.g. by clicking on the link), the recipient is redirected to the System which generates personalised Content for that recipient at that time. The content will be generated using a combination of the original Parameters and any new Parameters chosen by the System, Service Provider or 3^{rd} Party. In addition, the original parameters could be modified by the System based on Service Provider, 3^{rd} Party or other factors such as randomisation, adaptation to the Recipient's device, bandwidth or location. Content could be modified in a number of ways, for example, if the word "tomorrow" appeared as a parameter value, it may be changed to "today" or "yesterday" depending on the date on which the Recipient played the content relative to the date on which the Sender created it. Potentially Recipients could receive a shortened version of the content before deciding whether to view in full length, possibly for an additional charge.

The recipient also has the ability to easily further modify the Content by changing the Parameters themselves. This is possible as the original parameters (rather than the finalised multimedia content) are available to the System and the Sender. Recipients who change content in this way become Senders themselves, and they are able to forward this content (again as a URL Link) to their friends and other Col members.

### System Operation

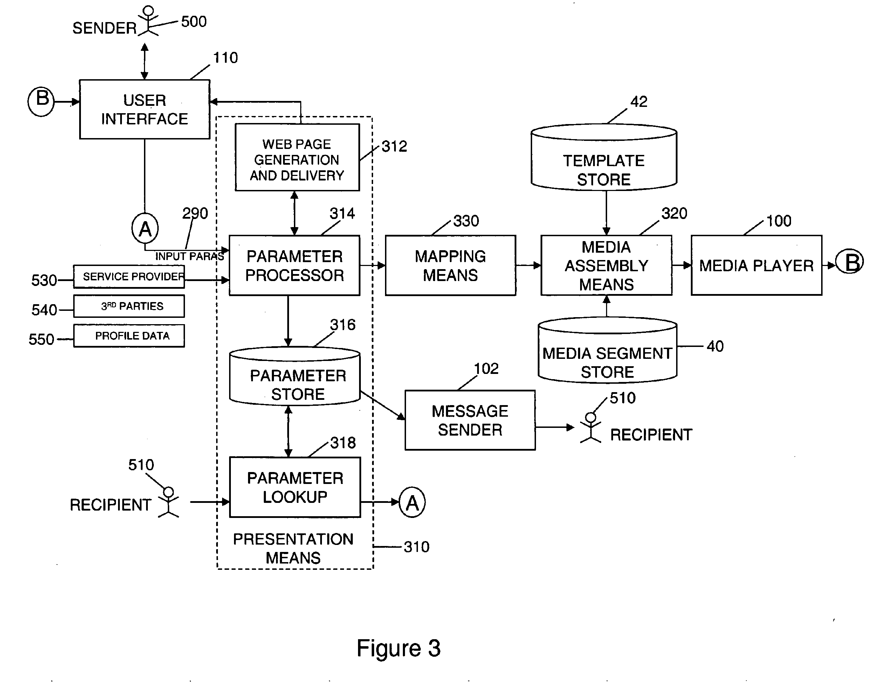

Turning now to Figure 3, the operation and interaction of the various components of the system of Figures 1 and 2 (including some components and sub-components not illustrated in Figures 1 and 2) will now be described.

Input parameters 290 are received from:
a) the Sender 500 via the user interface 110 (in this embodiment by transmitting these values in an HTML form embedded in the web page supplied by a web page generation and delivery module 312 of the presentation means 310 of the web server 30);
b) the service provider 530;
c) third parties 540 such as advertising networks, sponsors, etc.; and/or
d) other sources of profile data 550 such as web cookies or behavioural, contextual or publisher data.

Any of the Input Parameters could be manually or automatically entered - e.g. a Sender's online profile data could be used to automatically generate parameters (and in turn, media) or a Service Provider could automatically generate customised video for each viewer which can then be sent to their Col.

The Input Parameters 290 may include (but are not limited to):
Message options:
   Names and messages for recipients (filtering of the input text to remove swearing or other objectionable words is achieved using a look-up table approach), content to be included, duration of media, etc.;
Recipient address(es);
Techno-graphic data:
   Local time: versions suited to time of day and day of week;
   Location: regional versions including language and accent;
   Context: content based on the web page where the ad appears;
   Technology Attitude: versions for technophiles and technophobes;
   Repeat visits: evolving stories for repeat visits;
   Browser type: adapting content to suit the device capabilities;
   Bandwidth: optimising quality based on connection bandwidth;
Behavioural data:
   age, gender, tastes, etc. provided by ad-serving networks;
Publisher data:
   registered customer data, interests and preferences, advertising messages, sponsorship details, age rating of content, etc.

The Input Parameters include destination address information for the recipient(s) of the media to allow the media to be sent to the recipients.

The Input Parameters are processed by the Parameter Processor 314 of the presentation means 310 of the web server 30 to produce an array of Name-value pairs for each parameter and a unique identification reference for the parameter array. The array is stored in the Parameter Store 316 of the presentation means 310 against this Unique ID.

The output parameters from the parameter processor 314 are passed to the mapping means 330 which processes these simple parameters to generate control parameters which are usable by the media assembly means 320 in order to generate a media article. The mapping of the simple control parameters to narrative features is achieved by the use of a software map that allows the simple control parameters to be mapped to one or more control parameters within a template or "storyboard" such as the two-layer (storyboard plus story-fragments) approach as disclosed in WO 04/025508. Typically a simple control parameter will be mapped to either a specific Template storyboard, or a Template storyboard and one or more control parameters, or to one or more control parameters. The abstraction provided by the mapping allows a concept like 'Feature this person' to be translated into appropriate control parameters to determine the content of clips which are assembled to produce the output video. To control features which change the narrative, then a different storyboard will be used, or a combination of a storyboard plus a control parameter.

The Media Assembler 320 uses the control Parameters (output from the mapping means 330) to select an appropriate Template from a template store 42 into which appropriate media segments from the media segment store 40 are to be inserted. The templates and media segments (and any other Content included in alternative embodiments such as interactive animations or video game segments, etc.) are generally prepared in advance by a service provider (or operator of the service or another content provider). Media and other content can comprise a variety of elements including, for example:
Video clips;
Audio clips;
Audio/video clips;
Graphics / Images;
Text elements;
User interactivity instructions;
Sequencing and timing instructions;
Scripts (e.g. Flash® code); and/or
"Nested" components of other media and template elements allowing subsequences to be combined.

Media can also be dynamically created (e.g. new media can be inserted in the store 40 for inclusion as it becomes available such as latest news footage, sports highlights or user generated content).

A variety of media production and Assembly techniques could be employed in the System. For example, the Smart Content Realisation assembly technique described in WO 04/025508 is the most preferred technique for use in the present invention. The Media Assembly function also converts text fields into animated video graphics that are then placed in the video, at appropriate points and in context.

Once assembled, media is viewed on a Media Player which in the present embodiment comprises a plug-in for the web browser 100. The media player is generally a pre-installed application on the viewing device (e.g. Flash Player, Widows Media Player, QuickTime Player, etc.) though custom applications could also be used.

It should be noted that the Media Assembler and Media Player could be implemented in either the viewing device, or on a server within the network, or a combination of these locations.

The Sender 500 can preview the content and if required can modify the Input Parameters to change the resulting content to meet their requirements by manipulating, for example, a set of drop down menu items 131; note that the web page generation and delivery module 312 which forms part of the presentation means 310 of the web server 30 is responsible for generating the appropriate web page including these various interactive elements by which the sender 500 can modify the parameters. Once the Sender is satisfied with the content they can instruct the System to send the content to their chosen recipient(s) 510. The Message Sender 102 accesses the recipient address(es) either by selection of this (these) from the user's contacts list associated with and using the user's default email client application in the normal manner. Alternatively, the system can automatically generate and send a suitable message without further interaction from the user using data from the Parameter Store 316 if this information has been included in the parameter array by the sender 500. The message sender 102 or the delegated email - or SMS, IM, etc. client application - constructs a message containing a link to the System, which link includes the Unique ID of the Parameter List Name-Value pair Array. As noted above, the message may be sent via e-mail, SMS message, MMS message, or published to a bulletin board, blog or web site via a suitable gateway service over a network.

The recipients 510 can activate the link in the message they receive to view the content. The link directs the Recipient's browser device to the Web server 30 (or to a mirror server closer to the user's location where appropriate) where a parameter lookup module 318 performs a parameter lookup operation using the received Unique ID sent to it as part of activating the link (as part of an HTTP request) to lookup the corresponding parameter list array from the parameter store 316. This produces output parameters which are treated as the input parameters from a user to allow the content to be viewed ultimately (after possibly adding or changing some local parameters, mapping the parameters to control parameters and using these in the media assembly means to generate a media article which is ultimately played by the media player (forming part of the web browser) 100. In other words, the generation of content for the recipient is identical to that for the Sender with the exception that the Input Parameters are pre-defined rather than entered manually.

The content viewed by the Recipient could be identical to that produced by the Sender, or it could be modified based on the Input Parameters at the time the Recipient views the content. For example, the Service Provider 530 could enter input parameters to modify the advertising message or other aspects of the content at the time it is viewed by the Recipient 510, either to show, for example, a more up-to-date advertising message or to show one which is specific to the recipient's geographical location, if this is known to the system or if an educated guess about it can be made by the system, perhaps based on the recipient's IP address or email address, etc. In one preferred aspect the advertising message is only appended to the content when first viewed by a recipient and is not added when being previewed (by having pressed the preview button) either by a recipient contemplating forwarding on the video, or by an initial sender. Once the Recipient has viewed the content they can manually modify the parameters themselves and forward the resulting content to a new group of Recipients.

Note that in a preferred embodiment, the media article for playing by the media player which is located on the user's device is streamed using a streaming protocol which enables the media playing to be commenced before the entire media article has been received. In this case it is possible for the media assembly means to start streaming the article to the user's device (in particular to the web browser or media player running on that device) before the article has finished being assembled, as soon as the first few media segments have been selected. In this way the delay between a user selecting to view a media article and the commencement of viewing can be minimised.

It will be appreciated that the above described embodiment provides a mechanism for distributing multimedia as an abstracted set of controlling parameters rather than as finished media; and which permits multimedia to be dynamically adapted after it has been produced by the originator, at the time of playout of the media. It also provides a mechanism for allowing recipients of the multimedia to quickly, simply and easily re-edit the content of the multi-memdia. It also permits content to be distributed in a variety of formats (as determined by the parameters); furthermore, the media assembler is able to convert media segments from multiple different formats into a single format appropriate for playing by a target media player at the time of assembling the media article and thus the media segments can also be created or selected in multiple different formats.

### Scenario 2

To further clarify the operation of the above described system, consider a second usage scenario.

According to the second usage scenario, a football club (hereinafter referred to as "Club A") is providing a "viral video" service to users of the web-site, especially registered fans of the club (in fact, the viral video service is provided to Club A by the viral video service provider and Club A in turn then provides this service to its customers). In overview, the service permits a user to easily generate a small audio/video media article (of 30 or 60 seconds duration) which is based on Club A's historical video footage but which can be personalised in a number of ways (described below) and then a link to this can easily be sent to a friend, family member or colleague, etc. who in turn can further edit/personalise the audio/video media article for subsequent forwarding on to further recipients etc.

A prospective user of the service is invited to use the service by an email sent by Club A. Initially at least this will be sent to registered fans who have provided the club with their email details and requested receipt of emails from the club informing them of offers, news etc. The email describes the video-messaging service, and it contains a URL link which points to a 'Landing Page' on viral video service web-site specific to the service being offered to Club A. The Landing Page describes the video messaging service, and invites the user to create their own video message by moving to the next page.

### Link Format

The URL link is in the format:

### <URL>?<ident>

The <ident> is an index into a database of subscribers owned by Club A that contains the names and email addresses of subscribers to Club A's web-site. In the present embodiment, the servers running the viral video service are different to those running Club A's web-site and they are owned and administered by a separate company (which provides the service to Club A). Therefore, Club A does not give the viral video server administrator direct access to its subscriber database, but nonetheless, the ident allows the viral video web server to reconstruct a sub-set of that database by using the information that the users enter in order to create a video message. It also allows the viral video web server (or its administrators) to monitor how the invite emails are distributed. Once a user has received an email invite and has created a video, the ident is used to create an entry in the viral video service's database that contains the name and email address of the invited user (assuming that the first user is the recipient of the original invite email). If that user then sends the invite email to someone else, then when that other person creates a video message, the same ident will be used and our database will show two names and two email addresses.

In other applications, the ident could be used to check that the name and email address matched Club A's database and this could then be used by the viral video web server to prevent anyone other than the original recipient using the video messaging service. Alternatively, it could be used to detect changes of email address.

### Stage 1: Creating Your Video

Once the user has clicked on the button which links to the next page, then that web-page opens. This is stage 1 of the three stages which are required to create a video message, and the page is a form which the user needs to complete. The user fills in the details in the form, the top part of which includes their name, their email address, and the name of the recipient of the video message. The lower part of the form contains the details which are used to control the video contents as well as to control the overlays; the overlays allow text and graphics to be overlaid over the underlying video so that the video is seen playing in the background with the overlay graphics and/or text shown in the foreground. The settings/selections entered/made by the user are mapped to appropriate parameters in the request which will be sent to the viral video service web server.

The details include: the message duration (which is used to select media articles of appropriate durations); the message subject text (which will appear as overlay text in the video using, in the present embodiment, a Flash overlay animation); the personal message text (which will appear as overlay text in the video); the 'Special Date' (which is used as an index to a list of dated events, news items and trivia supplied by Club A); the Favourite Legend player (which allows a player to be selected from a drop-down list of candidates); the Favourite Current Player (which again allows a player to be selected from a drop-down list of candidates); the Rival Football Club (which allows a rival football club to be chosen from a drop-down list); and the Message Soundtrack (which allows a music track to be chosen from a drop-down list and which is played as a background track in addition to the audio associated with the selected audio/video clips).

When all the details have been entered into the form, the user may press the 'Preview Your Video Message' button at the foot of the page. From a user's perspective, this then takes the user onto the second stage of the process described below (provided s/he has filled out the form sufficiently - see below).

From the system's perspective, pressing the preview button causes the contents of the form to be pre-processed. In the present embodiment there are two stages to this pre-processing. Initially a Javascript running on the user's client browser (the Javascript is part of the HTML of the form-entry page) looks for empty fields in the form and requests completion from the user if any are found.

A second stage of pre-processing is performed by the web server; thus, the information entered into the form is sent to the viral video service web server and there a PHP script checks the free text fields (the user's name and the recipient's name) against a 'swear list' text file supplied by Club A. The swear list is a text file containing proscribed swear words selected by Club A. The PHP script checks for any instances of the words in the swear list in the free text fields, and if any match is found, then the word is replaced by four asterisk ('*') characters. The remaining details are converted into numeric form using look-up tables for each of the selectable parameters in the video. These numbers are used as the values for the selectable parameters in a parameter list message which is then sent from the web-server (which in the present embodiment acts basically as an interface between the user device and the delivery server) to the viral video service delivery server - the delivery server is kept separate from the web server in the present embodiment since they perform rather different functions, however these functions could be combined into a single device (alternatively the different functions could be further distributed between different devices depending on the overall number of connections which the solution needs to support etc.). The delivery server comprises most of the functions shown in Figure 3 apart from basic web-server functions, i.e. the delivery server performs the parameter processing, store and lookup functions, and provides the media assembler and the template store and the media and content store. Thus, in overview, the web server receives the form info, and converts it into a suitable form for passing to the delivery server and then it sends this information to the delivery server for further processing.

As an aside, In the present embodiment, when the delivery server receives a set of parameters for the first time from a respective user, it stores these in a look-up table together with a reference to the entry in the table which is then passed back to the user device (via the web server) and can thus be used by the user-device either for generating a subsequent preview or as the reference for sending on to one or more subsequent recipients of the video article message (discussed later in the scenario as viewed from the user's perspective).

Returning now to the user's perspective, as mentioned above, once the user has successfully completed and submitted the form by clicking the preview button, s/he is moved to a new web page corresponding to Stage 2 of the process.

### Stage 2: Previewing your video

From a user's perspective, at this point the video specified by the various options selected by the user is then displayed to the user. The processes performed by the delivery server to enable this are described in more detail in a separate section below entitled "Assembling the Media Article".

During the preview stage, as well as being able to interact with the video itself (e.g. to mute the sound, pause the video, rewind, fast-forward, etc.), the user can select one of two options, namely to "Re-edit the Video" (this takes the user back to the form-entry, "Stage 1" page where s/he can change the options selected to generate a new media article) or to "Send the Video" in which case the user is moved to a new web-page associated with Stage 3 of the process.

### Stage 3: Sending your video

Upon the user selecting to "Send the Video" s/he is moved to a new web-page where the user's information (name and email address) is re-iterated together with the recipient's name. It also includes empty fields to be completed by the user for the email address of the recipient, plus additional pairs of of name and address fields for additional people to be copied in on the video message (each generating in due course a new impression - see the discussion of media article assembly below). There is also a tick box allowing the user to subscribe to further offers from Club A. Having filled in at least the email address of the main recipient, the user clicks on a send button which then takes the user to a final closing web page.

### Closing Web Page

Having clicked on the send button (again provided that at least the main recipient email address has been filled in and no additional recipients have been specified without valid email addresses, etc.) the user is moved to the closing web page where s/he sees an acknowledgement that the video message(s) has (have) been sent. The user additionally has options now to either submit feedback on the experience (which generates a feedback form) or to create a new message, in which case they are returned to stage 1.

### Recipient Experience

Recipients of a video message receive an "acknowledgement" email which contains a link to a special video playback web page provided by the web server. This web page includes a display area where the Media article "created" by the sender is displayed to the recipient (with the normal video playback controls such as mute, rewind etc.). In addition the web page provides two selectable options (i.e. "buttons") to enable the recipient to select one of two main options (in addition to the video playback controls), namely to submit feedback (in which case a feedback form is generated) or to "create your own video" in which case the recipient is sent to the Stage 1 web page, but, in the present embodiment, with the various media article composition affecting parameters preselected in the form such that the recipient can select to modify only those parameters that s/he wishes to change. In an alternative embodiment however, the values would simply revert back to the default (and blank for free text entry fields) values presented to an initial creator of a media article.

Upon completion of the playback of the media article, the two options are still open to the recipient, but in addition the recipient is displayed a dynamic "Call to Action" (CTA) which is based on profiling information available at the time that the media article is played to the recipient. The dynamic CTA shows different "Calls" depending on the profile of the recipient. So someone who is not a subscriber to Club A might receive an invitation to subscribe while someone who is a subscriber but not a season ticket holder might be invited to become one, etc. Note that the original creator of the message does not see this CTA - they see a simple playback complete message instead. By not showing any CTA in the preview stage during creation of the message an advertiser is given a fairly free reign to place any desired CTA at the end of the playback by a recipient without giving rise to adverse reactions from the users (i.e. senders and recipients) resulting from a sender feeling initially that he had "control" or visibility at least over this aspect of the article and then finding out subsequently that s/he didn't.

### Media Assembly

In the present embodiment, there are two main processes involved in permitting media to be rapidly assembled and delivered to a user over a network connection. The first is a pre-publishing process, and the second is an assembly and delivery process.

The pre-publishing process is performed over a period of time by human editors using a set of creation tools including a creation tools database. This process involves determining a set of playlists for each given set of possible input parameter values and pre-processing each possible required audio/video component as much as possible to minimise the amount of work needed to be done by the assembler.

Thus, as a pre-publishing stage, the delivery server has identified at least one playlist for each possible combination of the selectable options (the free text entry options are handled using a FLASH overlay mechanism which takes as in input parameter some free text to be included in the overlay - other input parameters required by the FLASH overlay mechanism (e.g. font, size of text, duration, etc.) are pre-set as part of the pre-publishing playlist generation step). Therefore, when the delivery server receives a parameter list (possibly after some pre-processing by the parameter processor 314), in overview, it looks up the pre-published playlist, obtains the audio/video clips specified in the playlist, and then the media assembler combines the different video or audio/video clips together to generate the media article for subsequent download back to the user (Note some of the audio/video components will need to be concatenated along the timeline - e.g. audio/video clips, whilst some will act as parallel layers to be "displayed" in parallel with one another - for example, a separate audio backing track could be interleaved within the FLV format file after any separate video or audio/video clips have been concatenated together along the timeline; similarly any text or graphics to be overlaid over the video are merged as a parallel layer at the assembly stage). In this way, the final media article for download and display to the user is generated.

In order to identify an appropriate playlist for each combination of selectable parameters as a pre-publishing stage, in the present embodiment, there are four key selectable parameters namely a favourite legendary player parameter, a favourite current player parameter, a rival football team parameter and a soundtrack parameter. In the present embodiment there are 4, 3, 4 and 3 user selectable possibilities given for each of these options respectively. Each possible combination of favourite player and rival team, and of the legendary player and rival team is mapped to a set of video clips showing classic footage (usually goals being scored) involving the selected player when playing in a match against the selected rival team (where such clips are available - otherwise the clips mapped to are just classic clips containing the selected player irrespective of the opposition team). Typically for each player/team combination there are two or three clips of different durations which may be concatenated together to generate mini-assemblies, etc. This quickly leads to a large number of possible combinations of clips to be concatenated to form the overall video - however, as a pre-publishing stage in the present embodiment, each possible combination (for a given single set of user-selectable options) is examined for overall duration and only two are chosen, one which most closely matches a 30 second duration and one which most closely matches a 60 second duration (since these are the two user selectable options in the present embodiment), and then the corresponding playlists to these combinations are selected.

Each such combination of the main selectable parameter options may however contain a number of separate playlists in order to provide further customisation options which are not controlled directly by the user selectable options such as the bandwidth of the network connection of the user device to which the media article is to be downloaded, etc. as discussed below.

Thus, when the delivery server receives either a request message specifying a set of parameter values selected by a user generating a media article for the first time (this set of parameter values is referred to as a parameter list) or a request message containing a reference (in which case it extracts the corresponding parameter list from its lookup table) this parameter list may in some embodiments in fact be only a partial list with some empty placeholders for some values which need to be added after some additional actions have been taken by the delivery server. In such cases, the delivery server performs these additional actions in order to complete the parameter list (e.g. measuring the bandwidth of the device to which the article is to be sent - see below, obtaining any geographical or current date and time information or additional system information about the user's device which may be additionally required, etc.) and uses the completed parameter set to choose the appropriate playlist, and this is then used to assemble and deliver the audio/video media article to the client as a progressive video download.

As a final stage of customisation of the media article, additional inputs could be provided by, for example, the Football Club A (in the present embodiment). This could for example be done remotely via a secure web-interface and may specify an additional or alternative clip or animation to include in or after the media article (this could therefore allow dynamic changes to be made to the video or graphical or audio overlay content etc, for example for promotional or advertising properties, etc.). In particular a new CTA can be provided by the Football Club and indeed this can be presented as a separate download - i.e. not as part of the media article at all, but simply a new web page, etc.

In the present embodiment, Flash animation overlays and audio/video synchronisation information is all packaged in the assembled audio/video media article sent to the client, however, in alternative embodiments additional information could be sent to the clients to control the text and graphic overlays, as well as the synchronisation of the audio and video components that are downloaded.

The process of downloading the content to the client involves a number of stages in the present embodiment, namely:
1. Flash 'Wrapper' download (the main client application) (if not already loaded into the user's computer);
2. FLV Player Flash Component download (used to check bandwidth); and
3. AV media article file download (Video, Audio, Overlay information).

The AV file could be in a number of forms. In the present embodiment, it is a closed 'video' file encoded using a codec which generates the Flash-native .FLV encoded audio/video file format, however, in alternative embodiments it could be an open abstracted control file like SMIL with separate audio/video, image, animation and/or text files etc. enclosed, referenced or linked to, etc., or some other proprietary multimedia format, etc.

The 'Wrapper' application (e.g. a Flash player plugin for a web browser) provides the client-side windowing, control, download of files, synchronisation of video playback with audio tracks and with the overlays etc., as well as the monitoring of user activity (pause, play, mute, etc.) at the client side (in accordance with the information contained in the media article.

In the present embodiment prior to downloading the media article (stage 3 of the download process enumerated above), a bandwidth measurement is made by downloading a file of a known length (the FLV Player Flash component in the present embodiment) from the delivery server to the client over the network connection, and timing the duration of the download. This bandwidth measurement is then used to determine which of a number of delivery options are used, namely either:
1. A graphical alternative (in this case the media article comprises just a Flash animation which requires much less data than a media article containing real video footage (albeit after compression));
2. A default quality video media article (where the bandwidth is sufficient for this - this option represents the normal case for most users having an average broadband network connection); or
3.A high quality video media article (where less compression (so as to maintain higher quality) is used and/or video with a greater number of pixels (to produce a greater video display area size for a given display resolution) is used - this option is used for users having a very high bandwidth network connection to provide them with an excellent quality).

These different delivery options are realised in the present embodiment by assembling different media articles based on the measured bandwidth - in other words, the measured bandwidth forms another parameter value used in the selection of a playlist. In the present embodiment, having made a bandwidth measurement for a particular user device, this is stored and it is not performed again for subsequent deliveries of a media article to the same user during the same session.

During playback of the media article, the user interface monitors (in the present embodiment) any interactions by the user and passes this information back to the delivery server. This includes mouse clicks on the play/pause button, the rewind button, the mute button, the volume controller and the video window itself, as well as any other control buttons in the in the client window. All of these interactions are passed as events to the delivery server, where they are time-stamped and stored in an impression database, along with additional information about the delivery of the video to that client, as explained below.

The impression database tries to fully characterise each "impression" of a complete delivery process as experienced by a user of the delivered media article - each individual delivery of an article is treated as a unique instance or impression and is uniquely logged - in the present embodiment - in the impression database. The logging includes details of the playlist used to generate the clips (and thus of the clips making up the media article) the parameter options selected including details such as the user's name and email address, the recipient's name and email address. it also includes timestamps for each aspect of the delivery of the article and any user interaction information (including timestamps for these); this means that if a user mutes the audio, rewinds some video or carries out any other click behaviour at a point or points in the video, then the video, audio and any overlays playing to the user at that or those instants can be determined from an analysis of the impression log (for example if a user terminates playback before the media article is finished, the place of playback within the article is noted for posterity). This impression information can be analysed to obtain useful information for Football Club A (or whoever the client using the service for their customers or potential customers is).

The database can be interrogated using a report generator, which produces detailed reports based on analysing the available data in a number of ways ranging from simple activity reports, through to reports showing the numbers of recipients who watched specific segments of a specific video. These reports can be used to refine the video and audio content that is delivered (the Creation Tools are used to change the content metadata or templates/storyboards, and these changes are then published and passed to the delivery server.) Reports are also available to stake-holders like brands, ad agencies, and content owners (in this case, this would be Football Club A and their ad agency).

### Notes

In the current implementation, the Sender's setting of parameters in the 'Edit' page (Stage 1) to control the video takes place in a client application running on the Sender's computer, with the web pages being served from a remote server computer, and with a network connection connecting the two computers. Other implementations, like running the 'client' application remotely on the server, could be used to provide similar functionality where the Sender's computing power is limited. Similar options exist for the Recipient's computer.

Regardless of how the parameters are captured, the function of the 'Edit' page remains the same: to enable the Sender to set a number of parameters which are then used to control the content, duration, or other aspects of the video that is served by the server. The mapping of these parameters to controllers within the Adaptive Media delivery system need not be one-to-one or straight-forward. So if there is a requirement to deliver a 30 second video and a 60second video, then the 30/60 selection parameter could be used to choose between two storyboards (one of 30 seconds duration, the other of 60 seconds duration), or alternatively could be used to influence a number of different sections in a single storyboard to produce the same control over duration of the final output video. Similarly, a parameter that is used to select a legendary player can be used more than once in different contexts inside the storyboard to provide control over an establishing shot of the legendary player, a close-up action shot of the legendary player, and a closing face shot of the legendary player. The same controller can be used in different ways in different storyboards, so a legendary player control might be used to select appropriate shots in a storyboard featuring that legendary player, or could be used to select a commentary featuring that player as the audio backdrop to a montage of scenes, or could be used to insert the legendary player in a storyboard giving an overview of the history of the football club.

The parameters are thus a simplified and abstracted way for a Sender to 'Edit' the video that is produced (and subsequently sent to the recipient). Once the Sender has chosen the parameters to control the duration, messages, overlays and content to be included in the video, then these parameters are stored in a database on the server side, and a unique reference to that database entry is then used to refer to that set of parameters.

This replacement of the list of parameters by a reference to a record in a database means that the list of parameters is not revealed when a Sender (or Recipient) plays a video, plus it eases the tracking of the delivery of specific playlists by reducing the amount of information that needs to be stored.

When the Sender has set the parameters from the 'Edit' page, they can then move to the 'Preview' page. The 'Preview" page takes the parameters stored in the record in the database, and uses them to select a playlist that matches those parameters (there may be several playlists that match the parameters) and then fetches the relevant video clips from the playlist and assembles them into the final output video. So the user can now see the video which is produced in response to the parameters that they have set. If the user does not like the video, then they can return (go back) to the 'Edit' page and change the parameters, then move back to the 'Preview' page and review the newly changed video output.

Publishing is used to optimise the delivery system at the expense of additional processing of content. When the process of producing adaptive media in the Creation Tools is complete, then the publishing process creates the playlists, and also carries out a number of optimisations on the media content. The optimisations can only take place once the playlists have been locked or frozen at the end of the creation stage, because it is only when the playlists are no longer being edited that the exact usage of clips can be determined. If optimisation was done before the playlists had been locked, then an edit to a storyboard might mean that a new video clip was used, and that new video clip would then have to be optimised and added to the delivery system storage.

The publishing process uses the playlists to identify the video clips which are actually used by the delivery system to assemble the final output videos. For example, a trailer for a movie might only use a few minutes of material from a 90 minute movie, and so it makes no sense to store the complete movie when only a few minutes of material are required. When the video clips have been identified, then they are extracted from the source material as individual files. These individual files are then processed so that they have a key-frame at the beginning and their length is adjusted to enable audio synchronisation. These individual files are then stored, ready to be used by the video assembler to assemble the output video.

### Scenario 3

To further clarify the operation of the above described system, consider a third usage scenario.

Thus, consider a template to be a story, and the control parameters to be assigned to elements within that story. So a templated story might be 'Goldilocks and the Three Bears' with a control parameter that might be used to control the number of bears - resulting in 'Goldilocks and the n Bears', where n could be any number from 0 to 10, as set by the control parameter. The video elements that would be used for the various settings of the control parameters might include the title video clip ('Goldilocks and no Bears', 'Goldilocks and the Bear', 'Goldilocks and the 2 Bears', 'Goldilocks and the 3 Bears', 'Goldilocks and the 4 Bears', 'Goldilocks and the 5 Bears'...), and key scenes where the bears need to be visible as a group. Close-up video clips of two specific bears could be used for any setting of the control parameter greater than 1; whilst video clips containing a third specific bear could only be used for control parameter settings of 3 or more.

The relationships which connect the parameters and the clips are as described in WO 04/025508, and include metadata matching, clip sequencing, and cause-effect linkages. In this case, metadata matching would be used to provide appropriately marked-up clips for specific control parameters. So clips of 2 specific bears (Mummy and Baby) would be marked up with a metadata value of '2', but also marked up with values of '3', '4', '5'... since they can be used for any setting of the control parameter other than 0 or 1. Clips of 3 specific bears (Mummy, Daddy and Baby) would have metadata markup of '3', '4', '5'... Clip sequencing might be used here to determine the order in which scenes are presented to the viewer, and so the metadata applied to the video clips might have values like 'Goldilocks alone in the woods', 'Goldilocks finds the cottage', 'Goldilocks and the chair', "Goldilocks and the porridge', 'Goldilocks and the bed', 'The Bears return', 'The Bears examine the broken chair', 'The Bears examine the empty porridge bowl', 'The Bears find Goldilocks asleep in the bed', and 'Goldilocks awakes and meets the Bears'. Cause-effect relationships could be used to set linkages between items and video clips, so a control parameter might allow selection of which items in the cottage Goldilocks interacts with.

So the 'Goldilocks eats porridge' control parameter would be linked via appropriate metadata to clips where she eats the porridge, and these could then be linked via cause-effect linkages to the related scenes where the Bears discover the empty porridge bowl. So if the cause is set to the eating, whilst the effect is the discovery, then selecting 'Goldilocks eats porridge' would result in video clips showing both her eating the clips AND the Bears discovering the empty bowl. But selecting the 'discovery' clips would not result in the 'eating' clips because of the way that the cause-effect linkages are set.

An alternative story Template might present the story as a series of flashbacks, where the Bears discover the broken chair, and we see a flashback of Goldilocks breaking it, the Bears discover the empty bowl, and we see a flashback of Goldilocks eating the porridge, etc. In this case, the cause-effect linkages would be set with the cause being the discovery of the item, and the effect being Goldilocks interacting with the item. The clip sequencing would be set differently here as well to reflect the flashback structure. Metadata could also be used to control the length of the video clips which are shown, as well as their significance to telling the story. A 'Length' control parameter might be used to determine if short, medium length or long clips are used (in practice, a finer degree of control over the clips could be provided) and video clips would be marked up with metadata reflecting their duration, thus allowing a control parameter to determine the duration of the story. Video clips could also be marked up with 'plot values' reflecting their importance to telling the story, thus allowing a control parameter to determine the depth of detail presented in the story.

By choosing short clips with high plot values, then the story will be presented in a short summary form, where the length and the depth of detail can be adjusted to suit the preference of the viewer. So a very brief summary of the story of 'Goldilocks and the Three Bears' might contain just three brief video clips: 1. Goldilocks discovering the cottage in the woods. 2. Goldilocks and the Bears see each other! 3. Goldilocks runs out of the cottage. An 'in depth' study of 'Goldilocks and the Three Bears' might start with a long establishing shot zooming in to the path leading in the woods as Goldilocks skips happily along it in the bright sunshine, with her quaintly pretty house receding into the distance behind her. As she goes deeper into the woods, the atmosphere might darken, the music might become less bouncy and more gloomy, and various cutaways to scuttling or attentively watching woodland creatures would be included... As can be imagined, it might take half an hour of screen time just for Goldilocks to get to the cottage, if a skilled director is in charge, out of a total running time of over two hours.

Different Templates might be used to produce different versions of the story, using video clips from a common pool, and perhaps adding in additional clips for specific purposes. So 'Goldilocks and Godzilla' might only require the Bears to be replaced with Godzilla for a simple version, but a more sophisticated version might replace the cottage with a Japanese setting. 'Goldilocks and the Three Godzillas' then requires just video clips of two more mutated lizards to be added. Complete localisation to a Japanese orientation might require the porridge to be replaced with sushi, the chair with a tatami mat, and the bed with a bedroll and hard pillow, and perhaps a change of hair colour for the leading lady!

The use of Templates, metadata and relationships means that simple control parameters can be used to enable an end user to control the story, characters, length, depth of detail, and many other narrative features, without needing to know anything other than how to interpet a control parameter name and change the setting. In contrast, trying to provide a method for an end user to control the complex inter-relationships between the various elements in a video story would require detailed knowledge of continuity, editing, story-telling and other skills.

An MP3 player's playlist facility provides the ability to sequence tracks in a specific order and so share the resulting list with others, and might be seen as being, in some way, analogous to the description above. But this invention provides multi-dimensional abstraction of the controls from the resulting media experience which are not available in a simple playlist. The component video clips are not in a simple list, rather they are assembled depending on the Template's story, the sequencing ordering, the control parameter settings for length, plot value, etc, and any linkages and cause-effect relationships.

The above scenario is now further expanded upon by considering some example possibilities for the simple parameters which the user and/or third parties can manipulate to obtain different media articles and the mapping rules which convert these into control parameters which are directly useable by the media assembly means in order to generate a corresponding media article (at run-time).

### Adjustable parameters

User controls presented to a user could include a choice of animals for Goldilocks to meet, food items to be consumed, and furniture items that can be interacted with. Because the actual assembly of the video is carried out at the time of delivery of the video, these parameters are not required to be finalised until that delivery takes place, and so placeholders can be used that are only resolved at the time of delivery. (For simplicity this 'time of delivery' variability is shown in the following lists as 'Local', meaning that the value is determined by time, location, or another contextual parameter relevant at the time of delivery of the video.)

So a list of 'Animals to be interacted with' could be:
1. Bears
2. Mice
3. Godzillas
4. <Local Animals tbc>

Where option 4 can be changed to suit the local requirements at the time of delivery, which could be time-based (Owls at night, Pidgeons during the daytime), location-based (Pandas for China, Eagles for the USA, Badgers for the UK...), context-sensitive (Donkeys for Blackpool, Cows for Surrey, Dogs for Crufts), or advertiser-based ad placement (The Cadbury's Caramel rabbit girl, or the Churchill dog, or a Ratatouie rat).

The 'food items to be consumed' could thus include:
1. Quaker oats
2. Kellogg's Cornflakes
3. Jordan's Crunch
4. <Local basic food tbc>
5. <Local speciality tbc

The 'furniture items to be interacted with' could include:
1. Sleeprite mattress
2. Ikea Bodun bed
3. <Local utility furniture tbc>
4. <Local speciality furniture tbc>
5. <Local dealer of branded furniture tbc>

Item 5 in the 'furniture list' provides two levels of abstraction: the brand of the furniture, plus the name of the dealer. This abstraction can be extended to suit complex chains of sponsorship, franchises, dealerships, partnerships and many other trading relationships and marketing arrangements.

In a similar way, the initial parameters may be pre-defined, or made 'local':
1. <Local minimum time tbc>
2. <Half way between local minimum and maximum tbc>
3. <Local maximum time tbc)

The delivery system will take the time control parameter shown here, convert the <expression> to a real value, and assemble a video with that as the duration parameter. (Limits on acceptable values for these locally determined parameters will need to be set during the design stage of the adaptive media.)

### Mapping Rules

The 'animals' control parameter could control video clips within a template, so that each time an animal clip is defined in the template, then a video clip with the animal set in the control parameter is included in the video delivery, so bears could become mice or Godzillas or whatever the locally appropriate animal is. Alternatively, this parameter could choose templates so that different stories are told. In the case of Bears, then Goldilocks is slightly smaller than the bears, and is probably threatened by them, but for the case of Mice, then Goldilocks is much larger than them, and the mice are likely to feel threatened by Goldilocks, and so the story would be very different.

The 'food' and 'furniture' control parameters might be used differently in different templates, and so the Bears case might have a long shot of the bears throwing the empty porridge bowl across the kitchen, whilst the Mice might have a close-up of the mice scuttling around the empty bowl. Goldilocks might be able to almost fit into the Baby Bear's chair, but would squash a Mouse's chair.

The content creation tools used to produce the video clips, assign metadata, and add relationships need to take these inter-relationships into account as part of the design and creation process. This is similar to the existing accessibility and acceptability criteria in video production - like testing for compatibility on monochrome televisions, looking for political incorrectness, providing sub-titles or signing for the deaf, providing spoken commentaries for the blind, etc.

More generally, the initial parameters (for example animals: bears, mice, godzillas) are intuitive controls for human users or for simple broad sweep manipulation by either human users or simple automated processes whilst the control parameters resulting from the mapping means are parameters such as <large animal template> and <in depth length> to enable the media assembly means to select an actual template (e.g. the in-depth, large animal story template) and then to select actual media segments for insertion into specific placeholders provided by the selected template (e.g. 3( or 2 or 1 or 0)-bear scenes, atmosphere scenes, etc.) as discussed in WO 04/025508. Once the actual desired media segments have been selected they are assembled together in an order which also depends upon meta-data contained in the media segments which gives an indication of the correct ordering of these segments, etc..

## Claims

1. A system for creating and editing time-varying media articles, the system comprising:
a sender user device and a recipient user device both having a user interface including a media presenting means and a parameter editing means;
media assembly means for assembling a media article based on a set of parameter values such that different sets of parameter values will cause correspondingly different media articles to be assembled; and
media segment storage means for storing a plurality of media segments suitable for combining together to form a media article; wherein
the user interface includes means for generating a reference associated with or including a set of parameter values suitable for use by the assembly means in assembling a media article, the reference being suitable for electronic distribution from the sender user device to the recipient user device and such that, when provided to the media assembly means, it permits assembly of the media article and presentation thereof within the media presenting means of either the sender or recipient user interface, and wherein, upon receipt of the reference by the recipient user device, a new reference may be created, based on the received reference, by modifying one or more of the parameter values to generate a new set of parameter values using the parameter editing means of the user interface.

2. A system according to claim 1 further comprising mapping means for mapping initial parameters to control parameters which permits a user to control the values of only a relatively small number of initial parameters via the user interface, which are then mapped by the mapping means to control parameters which more directly control the operation of the media assembly means in its assembly of the media article.

3. A system according to either one of the preceding claims wherein the media assembly means is operable to select and combine media segments stored in the media segment storage means in accordance with a set of control parameters which include, or are derived from, parameter values set by a user in combination with parameter values determined by a third party or in dependence upon contextual variables.

4. A system as claimed in any of the preceding claims wherein the media articles are audio video media streams suitable for playing by a media player embedded in a web-browser of a user device.

5. A method of creating and editing time-varying media articles, the method comprising:
causing a user interface on a user device associated with a sending user to display a media presenting area and a parameter editing area;
responding to user inputs from the sending user via the user interface to set a plurality of values for parameters displayed in the parameter editing area;
responding to further user inputs from the sending user via the user interface to cause a message to be sent to a user device associated with a first recipient user including a reference to the values for the parameters selected by the sending user; and, in response to the first recipient user selecting to view the media article by referring to the received reference:
assembling a plurality of media segments, stored in a media segment storage means, in dependence upon the set values for the parameters referred to by the reference, in order to generate a media article;
causing the generated media article to be played within the user interface of the first recipient user;
causing the user interface of the first recipient user to display a media presenting area and a parameter editing area;
responding to user inputs from the first recipient user via the user interface to set a plurality of values for parameters displayed in the parameter editing area;
responding to further user inputs from the first recipient user via the user interface to cause a message to be sent to a user device associated with a second recipient user including a reference to the values for the parameters selected by the first recipient user; and, in response to the second recipient user selecting to view the media article by referring to the received reference:
assembling a plurality of media segments, stored in a media segment storage means, in dependence upon the set values for the parameters referred to by the reference, in order to generate a media article; and
causing the generated media article to be played within the user interface of the second recipient user.

6. A method according to claim 5 further including the step of mapping the parameter values set by the sending user to a set of control parameters which are then used directly to assemble the plurality of media segments.

7. A computer program or programs for carrying out the method of either of claims 5 or 6.

8. Carrier means carrying the computer program or programs of claim 7.
